# EUROPÄISCHE PATENTSCHRIFT

(11) **EP 2 911 856 B1**
(45) Veröffentlichungstag und Bekanntmachung des Hinweises auf die Patenterteilung: **10.05.2017**
(21) Anmeldenummer: 13780145.2
(22) Anmeldetag: 23.10.2013
(51) Int. Cl.: B29C 45/16, B29C 67/24

(54) **VERFAHREN ZUM HERSTELLEN VON BESCHICHTETEN FORMTEILEN**
METHOD FOR PRODUCING COATED MOLDED PARTS
PROCÉDÉ DE FABRICATION DE PIÈCES MOULÉES REVÊTUES

(30) Priorität: 24.10.2012 DE 102012110148
(43) Veröffentlichungstag der Anmeldung: 02.09.2015
(73) Patentinhaber: KraussMaffei Technologies GmbH, 80997 München (DE)
(72) Erfinder: EICHLSEDER, Martin, 94167 Tettenweis (DE)
(74) Vertreter: Wilhelm, Ludwig
(86) Internationale Anmeldenummer: PCT/EP2013/072175
(87) Internationale Veröffentlichungsnummer: WO 2014/064155

(56) Entgegenhaltungen:
- EP-A1- 1 666 225
- DE-A1- 2 461 925
- DE-B3-102006 019 007
- JP-A- S6 321 110

## Beschreibung

Die Erfindung betrifft ein Verfahren zum Herstellen von beschichteten Formteilen, insbesondere ein Verfahren zum Beschichten von Kunststoffspritzgussteilen, bei dem zunächst ein Formteil in einer Formkavität, z.B. einer Spritzgießformkavität hergestellt wird. Nach dem Erstarren der Kunststoffschmelze wird für einen geeigneten Zeitpunkt das Formwerkzeug zumindest teilweise geöffnet. In das geöffnete Formwerkzeug wird eine Beschichtungsmasse eingebracht, mittels der das Formteil beschichtet wird.

Ein gattungsgemäßes Verfahren ist beispielsweise aus der DE 196 50 854 C1 bekannt. In dieser Schrift wird ein Verfahren zur Herstellung eines Mehrschicht-Kunststoffteils offenbart, bei dem ein Kunststoffspritzgussteil mit mindestens einer Schicht aus Zwei-Komponenten-Duroplast beschichtet wird. Das Kunststoffteil und die Schicht aus Zwei-Komponenten-Duroplast werden nacheinander im selben Werkzeug gespritzt.

Ein ähnliches Verfahren ist aus der US 4,207,049 bekannt, bei dem nach dem Spritzgießen des Formteils ein Lack in eine Lackierkavität des Formwerkzeuges eingebracht wird.

Aus der DE 24 61 925 ist ein Verfahren zum Lackieren von Kunststoffgegenständen unter Zuhilfenahme eines aushärtbaren Kunstharzlackes bekannt.

Das Dokument EP 1 666 225 A1 offenbart ein Verfahren zum Herstellen von beschichteten Formteilen in einem eine oder mehrere Kavitäten aufweisenden Formwerkzeug. Die für die Beschichtung vorgesehenen Reaktanden einer Zwei-Komponenten-Beschichtungszusammensetzung werden entweder vor dem Einspritzen in das Formwerkzeug gemischt oder sie werden in einer solchen Weise separat in das Formwerkzeug eingespritzt, dass die Vermischung der Reaktanden beim Einspritzen erfolgt.

Insbesondere bei der Verarbeitung von Zwei-Komponenten-Reaktivsystemen, die im ausgehärteten Zustand eine Duroplast-Beschichtung ausbilden, wie sie im oben genannten gattungsbildenden Stand der Technik offenbart sind, existieren eine Reihe von Schwierigkeiten und Problemen. Die zumindest zweikomponentigen Reaktivsysteme besitzen eine spezifische Temperatur, bei der die Vernetzung beginnt. Im praktischen Anwendungsfall ist es derzeit üblich und notwendig, das Reaktivsystem in einem Temperaturbereich um etwa 15°C zu halten, um eine vorzeitige Vernetzung zu verhindern. Vor diesem Hintergrund ist es schwierig, in einem Spritzgusswerkzeug, welches oftmals Temperaturen von weit über 150°C besitzt, diesen Temperaturunterschied aufrecht zu erhalten. Es erfordert hierbei hohe Aufwendungen hinsichtlich lokaler Kühlung bei der Verwendung eines solchen Reaktivsystems.

Ein weiterer Nachteil derartiger Reaktivsysteme ist, dass nur eine begrenzte Verarbeitungszeit verbleibt, wenn die Komponenten des Reaktivsystems einmal miteinander vermischt sind.

Aus diesen Nachteilen des Standes der Technik hat sich die Erfindung zur Aufgabe gestellt, ein Verfahren zum Herstellen von beschichteten Formteilen anzugeben, bei welchem ein deutlich verminderter Kühlungsaufwand für das Reaktivsystem bis zum Eintrag ins Werkzeug notwendig ist. Außerdem soll die mögliche Verarbeitungszeit des Reaktivsystems variabel einstellbar bzw. gezielt vorwählbar sein.

Eine weitere Aufgabe der Erfindung ist es, auch Formteile mit dreidimensionaler Raumform (insbesondere mit gewölbten Oberflächen und beliebig geformten Randkonturen hinsichtlich der Beschichtung) in einwandfreier Qualität herstellen zu können. Hierbei ist es insbesondere wichtig, für eine gleichmäßige Schichtdicke und eine gleichmäßige Aushärtung des Reaktivsystems zu sorgen.

Diese Aufgaben werden mit einem Verfahren zum Herstellen eines beschichteten Formteils mit den Merkmalen des Anspruchs 1 gelöst. Vorteilhafte Ausführungsformen sind in den Unteransprüchen angegeben.

Das erfindungsgemäße Verfahren zum Herstellen von beschichteten Formteilen in einem, eine oder mehrere Kavitäten aufweisenden Formwerkzeug weist zumindest die Schritte auf:
a) Herstellen eines Formteils in einer Kavität des Formwerkzeugs,
b) zumindest teilweises Öffnen der Kavität,
c) Einbringen eines Reaktivsystems R aufweisend zumindest zwei Komponenten A, B oder A', B' in die zumindest teilweise geöffnete Kavität,
d) wobei die Komponenten A, B oder A', B' örtlich getrennt voneinander in die Kavität eingebracht werden,
e) erneutes Schließen des Formwerkzeugs, wobei dabei die Komponenten A, B oder A', B' vermischt werden und über eine zu beschichtende Oberfläche des Formteils verteilt werden und
f) Vernetzen des Reaktivsystems R in der Kavität.

Das erfindungsgemäße Verfahren zeichnet sich insbesondere dadurch aus, dass die Komponenten A, B oder A', B' örtlich getrennt voneinander in die Kavität eingebracht werden. Dies bedeutet, dass beim erfindungsgemäßen Verfahren gerade kein bereits im optimalen Verhältnis von zumindest zwei Komponenten vermischtes Reaktivsystem in die Kavität eingebracht wird. Durch die örtlich getrennte Einbringung der Komponenten A, B bzw. A', B' befindet sich innerhalb der üblicherweise heißen Kavität, beispielsweise auf der Oberfläche des hergestellten Formteils oder auf der gegenüberliegenden Innenoberfläche der Formkavität lediglich nicht oder nicht ausreichend reaktive Bestandteile des Reaktivsystems. Hierdurch gelingt es, auf eine Kühlung des Werkzeugs und/oder der Formteiloberfläche verzichten zu können, da das Reaktivsystem, welches zur Beschichtung des Formteils Verwendung findet, nicht im reaktiven Mischzustand vorliegt.

Beim erfindungsgemäßen Verfahren folgt eine Vermischung der Komponenten A, B bzw. A', B' erst durch das erneute Schließen des Formwerkzeuges, bei dem die hierdurch erfolgende Verringerung des Kavitätenvolumens beim Schließen die eingebrachten Komponenten A, B bzw. A', B' zwangsweise miteinander in Berührung kommen und sich erst dann vermischen. Somit liegt beim erfindungsgemäßen Verfahren erst bei geschlossener Kavität (insbesondere geschlossener Beschichtungskavität) das Reaktivsystem in reagierbarem Zustand, d.h. in ausreagierbarer und vernetzbarer Mischung vor.

Gleichzeitig wird durch das Schließen der Kavität und durch die Verringerung des Lackvolumens eine Verteilung der örtlich getrennt voneinander eingebrachten Komponenten A, B bzw. A', B' über die Formteiloberfläche unter gleichzeitiger Mischung der Komponenten miteinander erreicht. Dies macht es möglich, die Kühlleistung zur Abkühlung des Werkzeuges deutlich zu verringern oder sogar ganz entfallen zu lassen.

Im Rahmen der Erfindung ist unter dem Begriff "Formwerkzeug" ganz allgemein ein Aufbau eines Kunststoffspritzgusswerkzeuges und/oder Beschichtungswerkzeuges gemeint, der üblicherweise aus zwei Hälften (und gegebenenfalls Schiebern) ausgebildet ist. Soweit im Rahmen der Erfindung von "dem Formwerkzeug" die Rede ist, ist selbstverständlich mitumfasst, dass in einer ersten Kavität (Formkavität), z. B. bestehend aus zwei Werkzeughälften, das Bauteil geformt wird. Eine zweite (Beschichtungskavität) Kavität kann dabei unter Zuhilfenahme einer anderen oder zweier anderen Formwerkzeughälften gebildet werden. Somit ist der Begriff "Formwerkzeug" im Rahmen der Erfindung nicht derart einengend zu verstehen, dass sowohl beim Formen des Bauteils als auch beim Beschichten des Bauteils immer dieselben Formwerkzeughälften das Formwerkzeug bilden müssen. Eine derartige Formwerkzeugkonstruktion, die mit unterschiedlichen Formwerkzeughälften zur Ausbildung einer Formkavität und zur Ausbildung einer Beschichtungskavität arbeitet, wird weiter unten als Schiebetischwerkzeug beschrieben.

Besonders vorteilhaft ist es beispielsweise eine Beschichtungskavität derart vergrößert auszubilden, dass der aufzubringende Lack bzw. das aufzubringende Reaktivsystem innerhalb der Beschichtungskavität auch die Bauteilränder umfließen kann, so dass auch die oftmals dünnen Bauteilränder ebenfalls beschichtet werden können. Hierdurch gelingt es in einfacher Art und Weise eine Bauteilkantenbeschichtung zu erreichen.

Ein weiterer Vorteil der Erfindung ist, dass beim erfindungsgemäßen Verfahren keine Abhängigkeit von der Vernetzungsgeschwindigkeit des verwendeten Reaktivsystems nach dem Einbringen ins Formwerkzeug im Vergleich zum Stand der Technik mehr besteht, so dass die chemisch-physikalischen Eigenschaften des verwendeten Reaktivsystems keinen oder nur einen sehr stark verringerten Einfluss auf die Zykluszeit nehmen. Dies ist insbesondere dann vorteilhaft, wenn beispielsweise bei komplizierteren räumlichen Geometrien des herzustellenden Formteils oder bei komplizierten und/oder zerklüfteten Randbeschnitten des herzustellenden Formteils der Eintrag des Reaktivsystems zur Beschichtung des Formteils an eine Vielzahl von unterschiedlichen Orten erfolgen muss. Für diesen bauteilabhängig, relativ komplizierten und relativ lang dauernden Auftrags- und Einbringvorgang des Reaktivsystems in die Kavität steht mit dem erfindungsgemäßen Verfahren ausreichend Zeit zur Verfügung.

Ein weiterer Vorteil des Auftragens des Reaktivsystem im geöffneten Werkzeug ist, dass bei einer solchen Vorgehensweise am fertig beschichteten Bauteil kein Lackanspritzpunkt/kein Anspritzpunkt für das Reaktivsystem sichtbar ist.

Gemäß einer vorteilhaften Weiterbildung des erfindungsgemäßen Verfahrens wird eine der Komponenten A, B oder A', B' auf die Oberfläche des zu beschichteten Formteils aufgebracht und die andere Komponente A, B oder A', B' in einer Schließrichtung des Formwerkzeugs gegenüberliegend auf eine Innenoberfläche der Formhälfte des Formwerkzeugs aufgebracht. Bei dieser Ausführungsform gelangen Tröpfchen der Komponenten A, B bzw. A', B' beim Schließen des Werkzeuges kurz vor der vollständigen Schließung des Werkzeuges miteinander in Berührung und werden beim Schließen des Werkzeuges direkt miteinander vermischt. Diese Ausführungsform gewährleistet eine besonders hohe Sicherheit eines gleichmäßigen Vermischungsgrades.

Gemäß einer weiteren Ausführungsform der Erfindung werden beide Komponenten A und B oder A' und B' örtlich voneinander beabstandet auf die zu beschichtende Oberfläche des Formteils oder örtlich beabstandet auf die Formfläche der geöffneten Formwerkzeughälfte auf die Kavität aufgebracht. Diese Ausführungsform der Erfindung ist insbesondere dann vorteilhaft, wenn eine komplizierte räumliche oder hinsichtlich des Beschnitts zerklüftete Formteilgeometrie vorliegt. Hierbei können durch geeignete Auswahl der Aufbringungsorte und der örtlichen Abstände der Komponenten zueinander optimale Ergebnisse hinsichtlich Vermischung und Verteilung der gemischten Komponenten auf der Formteiloberfläche erreicht werden.

Gemäß einer weiteren Ausführungsform der Erfindung werden die Komponenten A und B als Reinkomponente des Reaktivsystems in die Kavität eingebracht, wobei sie jeweils in einer Menge eingebracht werden, die für ein optimal vernetzendes Reaktivsystem vorgesehen ist. Bei dieser Ausführungsform ist von besonderem Vorteil, dass eine Vernetzung des Reaktivsystems vor dem Schließen des Werkzeuges ausgeschlossen ist und somit unabhängig von den Temperaturrandbedingungen und/oder den zeitlichen Randbedingungen eine unbeabsichtigte Vernetzung unterbleibt.

Gleichwohl ist es selbstverständlich möglich und gegebenenfalls sinnvoll die Komponenten A' und B' als teilvermischte, aus den Reinkomponenten A und B gebildete Komponenten A', B' einzubringen, wobei das Mischungsverhältnis der Komponenten A und B in den teilvermischten Komponenten A' und B' abweichend von dem zur optimalen Aushärtung/Vernetzung des Reaktivsystems vorgesehenen Mischungsverhältnis ist. Durch diese Maßnahme kann vorteilhafter Weise erreicht werden, dass je nach Bauteilgeometrie und/oder zeitlicher/örtlicher Rahmenbedingungen die gleichmäßige Vermischung der Komponenten zur Ausbildung des vernetzbaren Reaktivsystems erreicht wird.

Als vorteilhaft verwendbares Reaktivsystem (R) haben sich Reaktivsysteme bewährt, die thermisch aktivierbar sind oder anaerob vernetzen. Bei der Verwendung eines thermisch aktivierbaren Reaktivsystems ist von Vorteil, dass durch eine Temperatursteuerung im Formwerkzeug der Vernetzungsbeginn bzw. der Vernetzungsverlauf optimal beeinflusst werden kann. Bei einem anaerob vernetzenden Reaktivsystem ist von besonderem Vorteil, dass gegebenenfalls auf eine Werkzeugheizung oder Werkzeugtemperierung ganz verzichtet werden kann. Dies insbesondere dann, wenn das Formwerkzeug derart abgedichtet ist, dass während der Vernetzungsphase des Reaktivsystems kein Sauerstoff an das Reaktivsystem gelangen kann und so eine anaerobe Umgebung geschaffen wird.

Zweckmäßiger Weise werden die Komponenten A, B bzw. A', B' mittels einer Handlingeinrichtung in die geöffnete Kavität oder über entsprechende Zuführkanäle in zumindest einer Formwerkzeughälfte eingebracht. Dabei können die Zuführkanäle über Lackdüsen in die Kavität münden, welche gegebenenfalls mittels Nadelventilen oder dergleichen ansteuerbar sind.

Eine mögliche zweckmäßige Art des Aufbringens/Einbringens der Komponenten A, B auf die Oberseite des zu beschichtenden Formteils oder auf die Formfläche der Formwerkzeughälfte ist ein tröpfchen- oder tropfenförmiger Auftrag.

Gleichwohl können die Komponenten A, B bzw. A', B' auch strang- oder linienförmig aufgebracht werden. Dies bietet sich insbesondere dann an, wenn Formteile hergestellt werden, die eine zerklüftete bzw. relativ kompliziert geformte Randgeometrie aufweisen. Hier kann beispielsweise mittels iterativer Versuche oder mittels eines Simulationsprogrammes die optimale Verteilung und auch die optimale Vermischung der Komponenten in Abhängigkeit vom Auftragsort und der Auftragsart (tropfenförmig oder strangförmig) ermittelt werden.

Hieraus ergibt sich eine weitere vorteilhafte Ausführungsform der Erfindung, dahingehend, dass in Abhängigkeit der dreidimensionalen Raumform des Formteiles und/oder der Randgeometrie des Formteiles die Komponenten A, B bzw. A', B' lokal ungleichmäßig über die Oberfläche des Formteils gesehen aufgebracht werden können. Hierdurch gelingt es beispielsweise gegenüber der Schließrichtung des Werkzeuges winklig verlaufende Formteilflächenanteile zuverlässig zu beschichten. Gegebenenfalls können insbesondere in Eckbereichen oder engen Rundungsbereichen hier höhere Mengen der Lackbeschichtung notwendig werden. Dies kann durch eine über die Oberfläche des Formteils ungleichmäßige Einbringung der Komponenten in einfacher Art und Weise erreicht werden.

Gemäß einer weiteren Ausführungsform der Erfindung wird eine der Komponenten A, B bzw. A', B' an einer geringen Anzahl von Orten in jeweils größerer Menge und die andere Komponente A, B bzw. A', B' an einer höheren Anzahl von Orten in jeweils geringer Menge aufgebracht.

Als besonders geeignet für das erfindungsgemäße Verfahren hat sich die Verwendung eines Formwerkzeugs in der Bauart eines Schiebetischwerkzeuges mit zumindest einer Formkavität und zumindest zwei Beschichtungskavitäten herausgestellt. Ein derartiges Werkzeug ist beispielsweise in der DE 10 2011 117 267.3 offenbart. Zur Ausgestaltung eines solchen Werkzeuges wird ausdrücklich auf diese Druckschrift verwiesen.

Nach Erreichen eines ausreichenden Maßes der Vernetzung des Reaktivsystems R im Formwerkzeug wird dieses geöffnet und das fertige Formteil kann aus dem Formwerkzeug entnommen werden. Dies geschieht üblicher Weise entweder mittels Auswerfern und/oder mittels einer Handlingeinrichtung, die das Teil entnimmt. Als geeignete Reaktivsysteme haben sich Lacke, Harze, insbesondere auf Polyurethanbasis (PUR), Acryllacke erwiesen.

Gemäß einer weiteren vorteilhaften Ausbildung der Erfindung kann diejenige Komponente B/B', welche auf das Formteil aufgetragen wird, in besonderer Weise dahingehend ausgewählt sein, dass diese Komponente nach Art eines Haftvermittlers auf dem Formteil wirkt oder entsprechende Zusätze enthält, die für eine erhöhte Haftvermittlung auf dem Formteil sorgen. Die gegenüberliegende Komponente A, A', welche zum Zeitpunkt des Auftrages und auch der Verteilung über das Formteil eher in der Nähe der späteren Außenoberfläche des fertig beschichteten Formteils liegt, kann Zusätze und/oder Eigenschaften aufweisen, die vorwiegend der späteren Gebrauchsanforderung der entstehenden Reaktivsystemschicht/Lackschicht nahekommen oder diese erfüllen. Durch diese Maßnahmen kann die zu bildende Reaktivsystemschicht hinsichtlich ihrer Eigenschaften weiter optimiert werden. Bei einer nicht unter den Schutzbereich der Ansprüche fallenden Ausführungsform können die Komponenten auch zeitlich versetzt zueinander auf einer Oberfläche, zum Beispiel auf dem Formteil, aufgetragen werden. Dabei können unterschiedliche Szenarien verwirklicht werden. Es ist zum Beispiel möglich, dass die Komponenten A und B strangförmig ausgetragen werden, so dass eine Linie gebildet wird. Dabei kann ein Strang der Komponente A auf einen zeitlich und räumlich voreilenden Strang der Komponente B abgelegt werden, oder umgekehrt. Die Komponenten A und B liegen in diesem Fall auf- oder übereinander. Je nachdem, welche Komponente zeitlich vorauseilt und demzufolge den ersten Strang bildet, kommt A auf B zu liegen oder umgekehrt B auf A. Es ist aber auch möglich, den Lackaustrag so zu steuern, dass auf dem Formteil eine Reihe von hintereinander liegenden Tropfen gebildet wird, wobei sich die Komponenten A und B abwechseln, d.h.: B-A-B-A-B-A-B und so fort. In den hier möglichen Szenarien kommt es jeweils erst beim Schließen des Formwerkzeugs zu einer Vermischung der Komponenten A und B in einer Weise, wie sie für die Vernetzungsreaktion erforderlich ist.

Gegebenenfalls können ein örtlich getrennter Auftrag der Komponenten und ein zeitlich versetzter Auftrag der Komponenten auch miteinander kombiniert werden. Letztendlich hängt es vom jeweiligen Anwendungsfall ab, welches Reaktivsystem geeignet ist und wie die Komponenten des Reaktivsystems getrennt voneinander in die Kavität eingebracht werden.

Im Folgenden wird die Erfindung anhand der Zeichnung beispielhaft näher erläutert:
- Figur 1:: zeigt eine schematische Darstellung eines Schiebetischwerkzeuges aufweisend eine Formkavität und eine Lackier- bzw. Beschichtungskavität in einem geöffneten Zustand;
- Figur 2:: zeigt das Schiebetischwerkzeug gemäß Figur 1 in einem teilgeschlossenen Zustand;
- Figur 3:: zeigt ein Formwerkzeug im geöffneten Zustand, wobei eine erste Ausführungsform des Auftrages der Reaktivsystemkomponenten dargestellt ist;
- Figur 4:: zeigt eine zweite Variante des Reaktivsystemauftrages;
- Figur 5:: zeigt eine dritte Variante des Reaktivsystemkomponentenauftrages.
- Figur 6:: schematisch eine Draufsicht auf ein Formteil, welches mittels des erfindungsgemäßen Verfahrens hergestellt wird;
- Figur 7:: schematisch eine Draufsicht auf ein weiteres mögliches Auftragsbild auf ein Formteil 4 des erfindungsgemäßen Verfahrens.
- Figur 8:: zeigt eine vierte Variante des Reaktivsystemkomponentenauftrages.

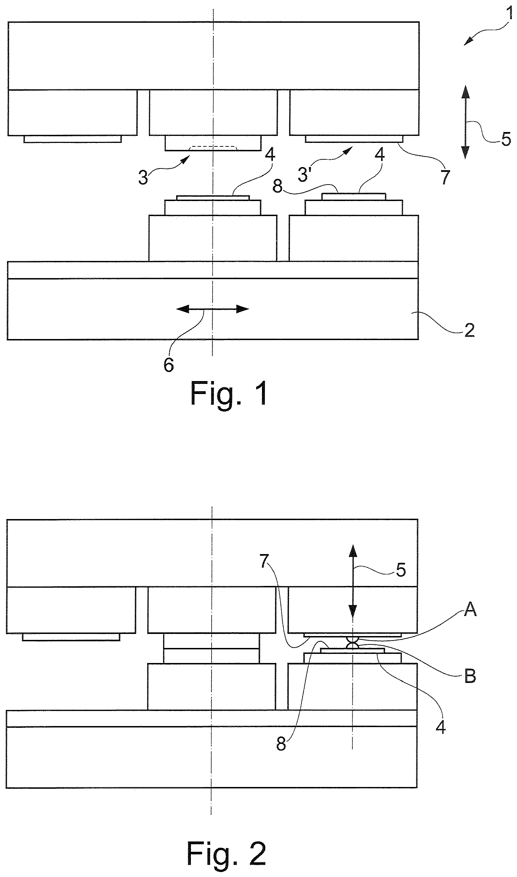

Im Folgenden wird anhand der Figuren 1 und 2 das erfindungsgemäße Verfahren beispielhaft näher erläutert.

In Figur 1 ist ein Formwerkzeug 1 in der Bauart eines Schiebetischwerkzeuges mit einem Schiebetisch 2 gezeigt.

Das Formwerkzeug 1 besitzt zwei Kavitäten 3, 3', wobei die Kavität 3 die Formkavität zur Herstellung eines Formteiles 4 ist und die Kavität 3' eine Beschichtungskavität zum Aufbringen einer Beschichtungsmasse, insbesondere eines Reaktivsystems R darstellt.

Das Formwerkzeug 1 kann in einer Schließrichtung 5 geöffnet und geschlossen werden. In der in der Figur 1 dargestellten Lage wird im geschlossenen Zustand des Formwerkzeugs 1 in der Formteilkavität 3 des Formteils gespritzt. In der Beschichtungskavität 3' erfolgt parallel zum Spritzgussprozess ein Beschichtungsprozess.

Die in Figur 1 unten dargestellten beiden Formwerkzeughälften sind in einer Richtung 6 verschiebbar angeordnet, so dass immer eine Formwerkzeugstation existiert, aus der ein hergestelltes Teil entnommen werden kann. Der in der Formkavität 3 stattfindende Spritzgussprozess zur Herstellung des Formteils ist allgemein bekannt und wird im Folgenden nicht mehr näher erläutert. Die folgenden Erläuterungen beziehen sich allesamt auf die Beschichtungskavität 3', innerhalb der das Reaktivsystem R mit den Komponenten A, B eingetragen wird.

Die Beschichtungskavität 3' besitzt an ihrer in Figur 1 oben dargestellten Formwerkzeughälfte eine Innenoberfläche 7. Das Formteil 4 besitzt eine zu beschichtende Oberfläche 8. Das Formwerkzeug 1 gemäß Figur 1 befindet sich in einem Ausgangszustand, bei dem ein Formteil in der Beschichtungskavität 3' vorliegt, jedoch die Komponenten A, B bzw. A', B' des Reaktivsystems R noch nicht in die Kavität 3' eingebracht sind.

Figur 2 zeigt das Formwerkzeug 1 in einem teilgeschlossenen Zustand, bei dem die Formkavität 3 bereits geschlossen ist und die Beschichtungskavität 3' teilweise geschlossen ist, wobei auf die Innenoberfläche 7 eine bestimmte Menge der Komponente A des Reaktivsystems R und auf der Oberfläche 8 des Formteils 4 eine Komponente B des Reaktivsystems R aufgebracht sind. Die beiden Komponenten A und B sind dabei in der Schließrichtung 5 des Formwerkzeugs genau gegenüberliegend auf die entsprechenden Flächen aufgebracht, so dass die eingebrachten Komponentenmengen sich beim Schließen der Beschichtungskavität 3' zwangsweise bereits vor dem vollständigen Schließen der Kavität 3' berühren und somit durchmischen.

Wie bereits erwähnt, kann selbstverständlich auch die Komponente B an der Innenoberfläche 7 und die Komponente A auf der Oberfläche 8 des Formteils 4 aufgebracht sein.

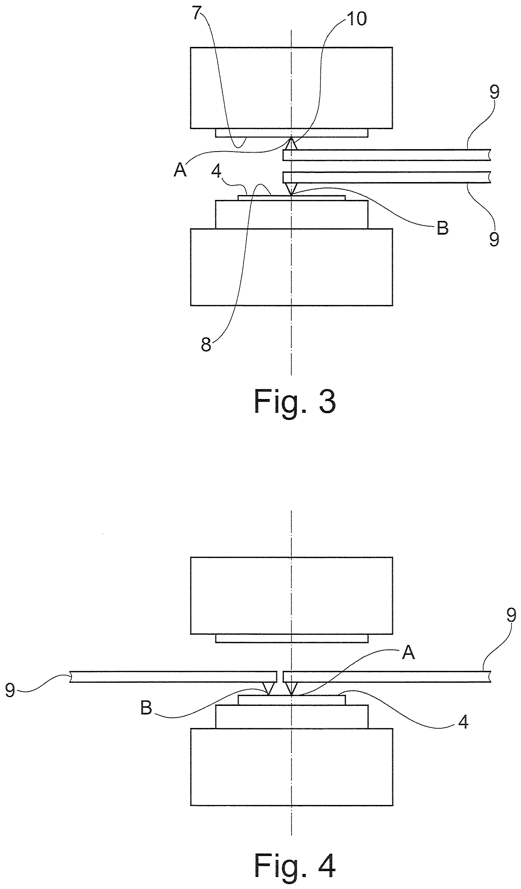

In Figur 3 ist dargestellt, wie die Komponenten A und B mittels einer Handlingseinrichtung 9, z.B. einem mit einer Lackauftragsdüse 10 bestückten Roboterarm eingebracht wird. Eine erste Handlingseinrichtung 9 sorgt für den Auftrag der Komponente A in die Innenoberfläche 7 der Beschichtungskavität. Eine zweite Handlingseinrichtung 9 sorgt für den Auftrag der Komponente B auf die Oberfläche 8 des Formteils 4.

Figur 4 zeigt eine weitere Alternative der Erfindung, bei der mittels einer Handlingeinrichtung 9 die Komponente A auf das Formteil 4 aufgebracht wird. Zeitgleich oder zeitlich versetzt kann an einem unterschiedlichen Ort vom Aufbringort der Komponente A mittels einer Handlingeinrichtung 9 die Komponente B auf die Oberfläche 8 des Formteils 4 aufgebracht werden.

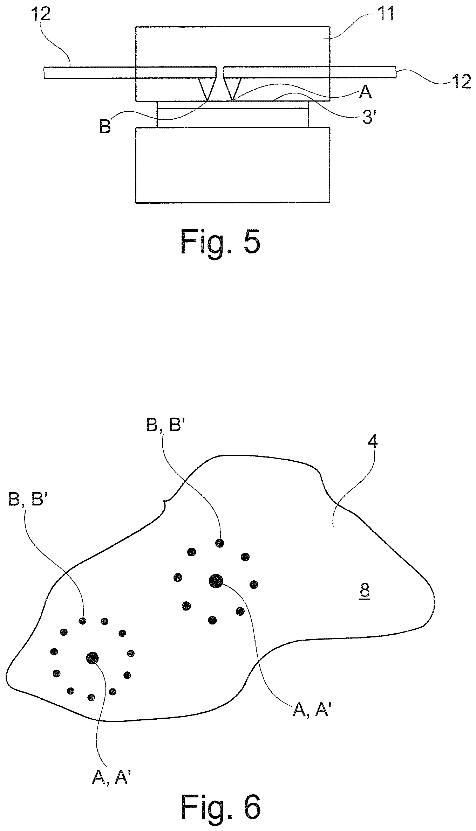

Figur 5 zeigt schematisch eine weitere Ausführungsform des erfindungsgemäßen Verfahrens, bei der mittels Kanälen die Formwerkzeughälfte 11 die Komponente A in die Beschichtungskavität 3' eingebracht wird. Ebenso sind für die Komponente B örtlich versetzt zu den Auftragsorten der Komponente A mittels weiterer Zuführkanäle 12 im Formwerkzeug geschaffen, mittels denen die Komponente B des Reaktivsystems R in die Kavität 3' eingebracht werden kann.

Figur 6 zeigt schematisch ein Formteil 4 in der Draufsicht, bei dem die Komponente A in einer größeren Menge auf die Oberfläche 8 des Formteils 4 aufgebracht ist. Radial umgebend um die Komponente A sind eine Vielzahl von Auftragsorten für die Komponente B vorgesehen, die jeweils in geringerer Menge auf die Oberfläche 8 des Formteils 4 aufgebracht ist.

Die absoluten Mengen der jeweiligen Komponenten A und B ergeben sich in einfacher Art und Weise in Abhängigkeit des Mischungsverhältnisses der Einzelkomponenten A und B bzw. A' und B' des konkret verwendeten Reaktivsystems R.

Soweit bislang lediglich von den Komponenten A und B, also den Reinkomponenten des Reaktivsystems R die Rede war, so beziehen sich sämtliche Ausführungen auch auf bereits teilvermischte Komponenten A' und B', wobei diese teilvermischten Komponenten A' und B' jeweils eine bestimmte Menge der Komponente A (Reinkomponente) und der Komponente B (Reinkomponente) enthalten, wobei das Mischungsverhältnis bevorzugt deutlich abweichend von dem optimalen Mischungsverhältnis, welches für das Reaktivsystem R spezifisch angegeben ist, vorliegt.

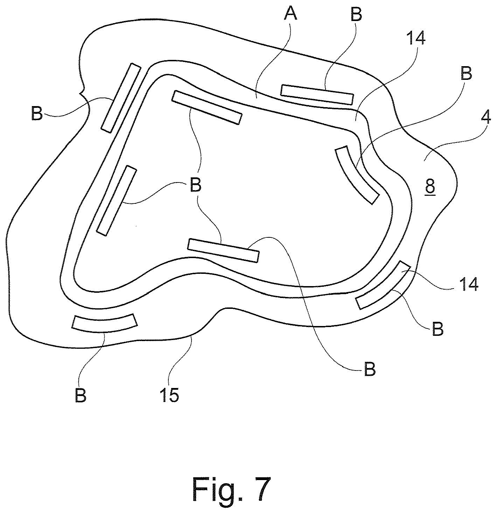

Bei der Ausführungsform gemäß Figur 7 (Draufsicht auf ein Formteil 4 bzw. dessen Oberfläche 8) liegt die Komponente A beispielsweise als Strang 14 vor. Benachbart zum Strang 14, dessen Verlauf auf der Oberfläche 8 in Abhängigkeit von der Bauteilkontur 15 gewählt ist, sind im Beispiel gemäß Figur 7 eine Vielzahl von Strängen 14 der Komponente B benachbart zum Strang der Komponente A angeordnet.

In einer weiteren Ausführungsform (nicht dargestellt) ist beispielsweise die Komponente A als Strang 14 auf der Oberfläche 8 des Formteils aufgebracht, wie es in Figur 7 dargestellt ist. Die Komponente B kann ist in einem in Schließrichtung 5 gleichen Verlauf in der Innenoberfläche 7 der Kavität 3' ebenfalls strangförmig eingebracht. Es versteht sich von selbst, dass das Aufbringmuster der Komponenten A und B über die Innenoberfläche 7 oder die Oberfläche 8 grundsätzlich beliebig wählbar ist, so kann die in Figur 7 dargestellte Stranggeometrie ohne Weiteres auch durch eine tröpfchenartige Aufbringung der entsprechenden Komponenten realisiert werden, so dass die Stränge 14 durch eine Vielzahl von nebeneinander geordneten Tröpfchen der jeweiligen Komponente A und B gebildet werden.

Je nach Bauteilgeometrie, insbesondere in Abhängigkeit der dreidimensionalen Raumform des Formteils 4 oder des Verlaufes der Kontur 15 des Formteils 4 kann es beispielsweise auch Sinn machen, in einem Bereich des Formteils 4 Reinkomponenten A und B in die Kavität einzubringen und an anderer Stelle der Oberfläche 8 des Formteils 4 beispielsweise teilgemischte oder vorgemischte Komponenten A' und B'. Wie die Komponenten ausgewählt werden, ob als Reinkomponente oder als teilgemischte Komponente hängt im Wesentlichen von der Bauteilgeometrie ab und muss bauteilspezifisch ermittelt und optimiert werden.

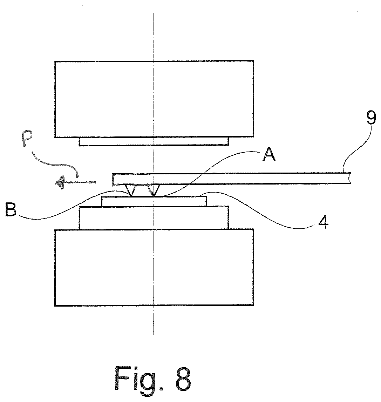

Die Figur 8 zeigt eine weitere Ausführungsform des Reaktivsystemauftrags. Die Lackaustragsdüsen 10 sind an einem Roboterarm der Handlingseinrichtung 9 in Längsrichtung des Roboterarms gesehen hintereinander und voneinander beabstandet angeordnet. Wird die Handlingseinichtung 9 in Richtung des Pfeils P bewegt, d.h. in Längsrichtung der Handlingseinrichtung bzw. des Roboterarms, so passiert folgendes. An einem bestimmten Ort beginnt der Lackauftrag der Komponente B auf das Formteil 4. An diesem Ort kommt die Lackdüse mit der Komponente A erst nach Verstreichen einer kurzen Zeitspanne an, d.h. an diesem Ort wird die Komponente A zeitlich versetzt zu der Komponente B aufgetragen. Je nach Ausgestaltung des Austrags der Komponenten A und B können unterschiedliche Szenarien verwirklicht werden. Bei einem tropfenförmigen Austrag können die Bewegung der Handlingseinrichtung und der Lackaustrag so gesteuert werden, dass auf dem Formteil 4 eine Reihe von hintereinander liegenden Tropfen gebildet wird, wobei sich die Komponenten A und B abwechseln, d.h.: B-A-B-A-B-A-B und so fort. Es ist aber auch möglich, dass die Komponenten A und B strangförmig ausgetragen werden, so dass eine Linie (analog der Linie A in der Figur 7, jedoch als Gerade) gebildet wird. Nicht unter den Schutzbereich der Patentansprüche fällt, wenn der Strang der Komponente A auf den zeitlich und räumlich voreilenden Strang der Komponente B abgelegt wird. Die Komponenten A und B liegen in diesem Fall aufeinander. Wird die Handlingseinrichtung 9 in einem Winkel zu dem Pfeil P verfahren und die Komponenten A und B werden strangförmig aufgebracht, so werden die Komponenten A und B auch örtlich getrennt voneinander auf das Formteil 4 aufgebracht. Je nach Verfahrweg der Handlingseinrichtung 9 können sich die Stränge der Komponenten A und B auch kreuzen. In den vorgenannten Szenarien kommt es jeweils erst beim Schließen des Formwerkzeugs zu einer Vermischung der Komponenten A und B in einer Weise, wie sie für die Vernetzungsreaktion erforderlich ist.

Das Aufbringen der Komponenten A und B kann nicht nur - wie hier näher beschrieben - tröpfchenförmig, tropfenförmig oder strangförmig erfolgen. Grundsätzlich können die Komponenten A und B auch in anderer Form aufgebracht werden. Denkbar wäre ein mehr oder weniger flächiges Aufbringen der Komponenten A und/oder B. Beispielsweise könnte für die Komponente A oder die Komponente B (oder für beide Komponenten) das Aufbringen mittels einer Walze erfolgen. Insbesondere in der Ausführungsform gemäß der Figur 3 könnte ein solch flächiger Auftrag vorgesehen werden. Dabei könnten das Formteils 4 und/oder die Innenoberfläche 7 ganz oder teilweise mit der jeweiligen Komponente beschichtet werden.

### Bezugszeichenliste

- 1: Formwerkzeug
- 2: Schiebetisch
- 3, 3': Kavitäten
- 4: Formteil
- 5: Schließrichtung
- 6: Richtung
- 7: Innenoberfläche
- 8: Oberfläche
- 9: Handlingseinrichtung
- 10: Lackauftragsdüse
- 11: Formwerkzeughälfte
- 12: Zuführkanäle
- 13 14: Strang
- 15: Bauteilkontur

- A, B: Komponenten
- A', B': Komponenten
- R: Reaktivsystem

## Patentansprüche

1. Verfahren zum Herstellen von beschichteten Formteilen (4) in einem, eine oder mehrere Kavitäten (3, 3') aufweisenden Formwerkzeug (1), aufweisend zumindest die Schritte:
a) Herstellen eines Formteils (4) in einer Kavität (3, 3') des Formwerkzeugs (1),
b) zumindest teilweises Öffnen der Kavität (3, 3'),
c) Einbringen eines Reaktivsystems (R) aufweisend zumindest zwei Komponenten (A), (B) oder (A'), (B') in die zumindest teilweise geöffnete Kavität (3'),
d) wobei die Komponenten (A), (B) oder (A'), (B') örtlich getrennt voneinander in die Kavität (3') eingebracht werden,
e) erneutes Schließen des Formwerkzeugs (1), wobei dabei die Komponenten (A), (B) oder (A'), (B') vermischt werden und über eine zu beschichtende Oberfläche (8) des Formteils (4) verteilt werden und
f) Vernetzen des Reaktivsystems (R) in der Kavität.

2. Verfahren nach Anspruch 1, **dadurch gekennzeichnet, dass** eine der Komponenten (A) oder (B) auf die Oberfläche (8) des zu beschichtenden Formteils (4) aufgebracht wird und die andere Komponente (A'), (B') der ersten Komponente (A) oder (B) gegenüberliegend auf eine Innenoberfläche (7) einer Formhälfte des Formwerkzeugs (1) aufgebracht wird, wobei insbesondere die Aufbringungsorte der ersten und zweiten Komponente (A, A', B, B') sich in einer Schließrichtung (5) des Formwerkzeugs (1) gegenüberliegen.

3. Verfahren nach Anspruch 1, **dadurch gekennzeichnet, dass** beide Komponenten (A) und (B) oder (A') und (B') örtlich voneinander beabstandet und zeitlich versetzt zueinander auf die zu beschichtende Oberfläche (8) des Formteils (4) aufgebracht werden oder beide Komponenten (A), (B) bzw. (A'), (B') örtlich beabstandet und zeitlich versetzt zueinander auf eine Innenfläche (7) der geöffneten Kavität (3') aufgebracht werden.

4. Verfahren nach einem der vorangegangenen Ansprüche, **dadurch gekennzeichnet, dass** die Komponenten (A) und (B) Reinkomponenten des Reaktivsystems (R) sind, die jeweils in einer Menge in die Kavität (3') eingebracht werden, die für ein optimales Vernetzen des Reaktivsystems (R) vorgesehen ist.

5. Verfahren nach einem der vorangegangenen Ansprüche, **dadurch gekennzeichnet, dass** die Komponenten (A'), (B') teilvermischte Komponenten aus den Reinkomponenten (A) und (B) sind, wobei das Mischungsverhältnis der Komponenten (A) und (B) in den teilvermischten Komponenten (A') und (B') abweichend von dem zur optimalen Vernetzung des Reaktivsystems (R) vorgesehenen Mischungsverhältnis ist.

6. Verfahren nach einem der vorangegangenen Ansprüche, **dadurch gekennzeichnet, dass** als Reaktivsystem (R) ein Reaktivsystem verwendet wird, welches durch thermische Aktivierung vernetzt.

7. Verfahren nach einem der vorangegangenen Ansprüche, **dadurch gekennzeichnet, dass** als Reaktivsystem (R) ein Reaktivsystem verwendet wird, welches unter Sauerstoffabschluss, d.h. in anaerober Umgebung vernetzt.

8. Verfahren nach einem der vorangegangenen Ansprüche, **dadurch gekennzeichnet, dass** die Komponenten (A), (B) oder (A'), (B') des Reaktivsystems (R) mittels einer HandlingEinrichtung (9) in die geöffnete Kavität (3') des Formwerkzeugs (1) eingebracht werden.

9. Verfahren nach einem der vorangegangenen Ansprüche, **dadurch gekennzeichnet, dass** die Komponenten (A), (B) oder (A'), (B') über Zufuhrkanäle (12) in zumindest einer Formwerkzeughälfte (11) in die Kavität (3') eingebracht werden.

10. Verfahren nach einem der vorangegangenen Ansprüche, **dadurch gekennzeichnet, dass** die Zufuhrkanäle (12) Lackdüsen für das Reaktivsystem (R) aufweisen.

11. Verfahren nach einem der vorangegangenen Ansprüche, **dadurch gekennzeichnet, dass** das Auf-/Einbringen der Komponenten (A), (B) auf die Oberseite (8) des zu beschichtenden Formteils (4) oder auf die Innenoberfläche (7) des Formwerkzeugs tröpfchenförmig oder tropfenförmig erfolgt.

12. Verfahren nach einem der vorangegangenen Ansprüche, **dadurch gekennzeichnet, dass** die Komponenten (A), (B) auf die Oberfläche (8) des zu beschichtenden Formteils (4) oder auf die Innenoberfläche (7) der Kavität (3') strangförmig aufgebracht werden.

13. Verfahren nach einem der vorangegangenen Ansprüche, **dadurch gekennzeichnet, dass** der Aufbringungsort der Komponenten (A), (B) oder (A'), (B') auf dem Formteil (4) oder der Innenoberfläche (7) der geöffneten Kavität (3') in Abhängigkeit der Formteilgeometrie, insbesondere der Formteilrandkontur (15) erfolgt, damit eine möglichst gleichmäßige Verteilung über die Oberfläche (8) des Formteils (4) sichergestellt ist.

14. Verfahren nach einem der vorangegangenen Ansprüche, **dadurch gekennzeichnet, dass** die sich auf dem Formteil (4) und der Innenoberfläche (7) der geöffneten Kavität (3') gegenüberliegenden Komponenten (A), (B) oder (A'), (B') kurz vor dem erneuten Schließen des Formwerkzeuges (4) berühren und so beim weiteren Schließen des Formwerkzeuges (4) innig vermischt werden.

15. Verfahren nach einem der vorangegangenen Ansprüche, **dadurch gekennzeichnet, dass** die Komponenten (A), (B) oder (A'), (B') hinsichtlich ihrer Menge und ihrer örtlichen Verteilung über die Oberfläche (8) des zu beschichtenden Formteils (4) und/oder die Innenoberfläche (7) der Kavität (3') in Abhängigkeit der Formteilgeometrie lokal unterschiedlich hinsichtlich der Menge und/oder der örtlichen Abstände zueinander aufgebracht werden.

16. Verfahren nach einem der vorangegangenen Ansprüche, **dadurch gekennzeichnet, dass** eine der Komponenten (A), (B) an einer geringen Zahl von Orten in jeweils größerer Menge und die andere Komponente (A), (B) oder (A'), (B') an einer höheren Anzahl von Orten in jeweils geringerer Menge aufgebracht werden.

17. Verfahren nach einem der vorangegangenen Ansprüche, **dadurch gekennzeichnet, dass** zur Vernetzung eines thermisch aushaltenden Reaktivsystems (R) zumindest eine Formwerkzeughälfte (11) auf eine für die Vernetzung erforderliche Temperatur aufgeheizt wird.

18. Verfahren nach einem der vorangegangenen Ansprüche, **dadurch gekennzeichnet, dass** bei der Verwendung eines anaerob vernetzenden Reaktivsystems (R) ein Aufheizen der Formwerkzeughälfte (11) unterbleibt.

19. Verfahren nach einem der vorangegangenen Ansprüche, **dadurch gekennzeichnet, dass** eine optimierte Verteilung der Komponenten (A), (B) und (A'), (B') auf der Oberfläche (8) des Formteils (4) bzw. der Innenoberfläche (7) der Kavität (3') in Abhängigkeit der Formteilgeometrie und/oder der Formteilraumform im Rahmen von Versuchen oder mittels einer Fließ-/Mischsimulation ermittelt wird.

20. Verfahren nach einem der vorangegangenen Ansprüche, **dadurch gekennzeichnet, dass** als Formwerkzeug (1) ein Schiebetischwerkzeug mit zumindest einer Formkavität (3) und zumindest zwei Beschichtungskavitäten (3') verwendet wird.

21. Verfahren nach einem der vorangegangenen Ansprüche, **dadurch gekennzeichnet, dass** nach einem ausreichenden Maß der Vernetzung des Reaktivsystems (R) das Formwerkzeug (1) geöffnet wird und das beschichtete Formteil (4) anschließend aus dem Formwerkzeug (1) entnommen wird.

22. Verfahren nach einem der vorangegangenen Ansprüche, **dadurch gekennzeichnet, dass** als Reaktivsystem (R) ein Lack, ein Harz, insbesondere Polyurethan (PUR), ein Acryllack oder ein anderweitig geeignetes Reaktivsystem (R) verwendet wird.

23. Verfahren nach einem der vorangegangenen Ansprüche, **dadurch gekennzeichnet, dass** die Komponente B, B' Haftvermittlereigenschaften aufweist oder mittels Haftvermittlerzusätzen versehen ist und/oder die Komponente A, A' Eigenschaften aufweist oder Zusätze enthält, die gewünschte Gebrauchsanforderungen der fertigen Lackschicht sicherstellen.

## Claims

1. A method for producing coated molded parts (4) in a molding tool (1), which has one or a plurality of cavities (3, 3'), having at least the steps:
a) producing a molded part (4) in a cavity (3, 3') of the molding tool (1),
b) at least partially opening the cavity (3, 3'),
c) introducing a reactive system (R) having at least two components (A), (B) or (A'), (B') into the at least partially open cavity (3'),
d) wherein the components (A), (B) or (A'), (B') are introduced into the cavity (3') at separate locations,
e) reclosing of the molding tool (1), whereby the components (A), (B) or (A'), (B') are mixed and are distributed across a surface (8) of the molded part (4) to be coated and
f) crosslinking the reactive system (R) in the cavity.

2. The method according to claim 1, **characterized in that** one of the components (A) or (B) is applied to the surface (8) of the molded part (4) to be coated and the other component (A'), (B') of the first component (A) or (B) is applied to an inner surface (7) of a mold half of the molding tool (1) on the opposite side, wherein in particular the application locations of the first and second component (A, A', B, B') are located opposite one another in a closing direction (5) of the molding tool (1).

3. The method according to claim 1, **characterized in that** both components (A) and (B) or (A') and (B') are applied to the surface (8) of the molded part (4) to be coated at separate locations and at offset times relative to one another or both components (A), (B) or (A'), (B'), respectively are applied to an inner surface (7) of the open cavity (3') at separate locations and at offset times relative to one another.

4. The method according to one of the preceding claims, **characterized in that** the components (A) and (B) are pure components of the reactive system (R), which are in each case introduced into the cavity (3') in a quantity, which is provided for an optimal crosslinking of the reactive system (R).

5. The method according to one of the preceding claims, **characterized in that** the components (A'), (B') are partially mixed components of the pure components (A) and (B), wherein the mixing ratio of the components (A) and (B) in the partially mixed components (A') and (B') differs from the mixing ratio provided for the optimal crosslinking of the reactive system (R).

6. The method according to one of the preceding claims, **characterized in that** a reactive system, which is crosslinked by thermal activation, is used as reactive system (R).

7. The method according to one of the preceding claims, **characterized in that** a reactive system, which crosslinks in the absence of oxygen, i.e. in anaerobic environment, is used as reactive system (R).

8. The method according to one of the preceding claims, **characterized in that** the components (A), (B) or (A'), (B') of the reactive system (R) are introduced into the open cavity (3') of the molding tool (1) by means of a handling device (9).

9. The method according to one of the preceding claims, **characterized in that** the components (A), (B) or (A'), (B') are introduced into the cavity (3') via feed channels (12) in at least one molding tool half (11).

10. The method according to one of the preceding claims, **characterized in that** the feed channels (12) have lacquer nozzles for the reactive system (R).

11. The method according to one of the preceding claims, **characterized in that** the application/introduction of the components (A), (B) to the upper side (8) of the molded part (4) to be coated or to the inner surface (7) of the molding tool takes place in a droplet-shaped or drop-shaped manner.

12. The method according to one of the preceding claims, **characterized in that** the components (A), (B) are applied to the surface (8) of the molded part (4) to be coated or to the inner surface (7) of the cavity (3') in a restiform manner.

13. The method according to one of the preceding claims, **characterized in that** the application location of the components (A), (B) or (A'), (B') on the molded part (4) or the inner surface (7) of the open cavity (3') takes place as a function of the molded part geometry, in particular of the molded part edge contour (15), so that a distribution, which is as even as possible, across the surface (8) of the molded part (4) is ensured.

14. The method according to one of the preceding claims, **characterized in that** the components (A), (B) or (A'), (B') located opposite one another on the molded part (4) and the inner surface (7) of the open cavity (3') touch one another shortly prior to the reclosing of the molding tool (4) and are thus closely mixed in response to the further closing of the molding tool (4).

15. The method according to one of the preceding claims, **characterized in that** the components (A, (B) or (A'), (B') are applied at separate locations with respect to the quantity and/or the separate locations with respect to their quantity and their local distribution across the surface (8) of the molded part (4) to be coated and/or the inner surface (7) of the cavity (3') as a function of the molded part geometry.

16. The method according to one of the preceding claims, **characterized in that** one of the components (A), (B) is applied at a smaller number of locations in each case in a larger quantity and the other component (A), (B) or (A'), (B') is applied at a larger number of locations in each case in a smaller quantity.

17. The method according to one of the preceding claims, **characterized in that**, for crosslinking a thermally stable reactive system (R), at least one molding tool half (11) is heated to a temperature required for the crosslinking.

18. The method according to one of the preceding claims, **characterized in that**, when using an anaerobically crosslinking reactive system (R), a heating of the molding tool half (11) is omitted.

19. The method according to one of the preceding claims, **characterized in that** an optimized distribution of the components (A), (B) and (A'), (B') on the surface (8) of the molded part (4) or the inner surface (7) of the cavity (3'), respectively, is determined as a function of the molded part geometry and/or of the spatial shape of the molded part in the context of experiments or by means of a flow/mixing simulation.

20. The method according to one of the preceding claims, **characterized in that** a sliding table tool comprising at least one mold cavity (3) and at least two coating cavities (3') is used as molding tool (1).

21. The method according to one of the preceding claims, **characterized in that**, after a sufficient level of crosslinking of the reactive system (R), the molding tool (1) is opened and the coated molded part (4) is subsequently removed from the molding tool (1).

22. The method according to one of the preceding claims, **characterized in that** a lacquer, a resin, in particular polyurethane (PUR), an acrylic lacquer or an otherwise suitable reactive system (R) is used as reactive system (R).

23. The method according to one of the preceding claims, **characterized in that** the component B, B' has bonding agent properties or is provided with bonding agent additives and/or the component A, A' has properties or includes additives, which ensure the desired usage requirements of the finished lacquer coating.

## Revendications

1. Procédé de fabrication de pièces moulées (4) revêtues dans un moule (1) présentant une ou plusieurs cavité(s) (3, 3'), présentant au moins les étapes suivantes :
a) fabrication d'une pièce moulée (4) dans une cavité (3, 3') du moule (1),
b) ouverture au moins partielle de la cavité (3, 3')
c) introduction d'un système réactif (R) présentant au moins deux composantes (A), (B) ou (A'), (B') dans la cavité (3') ouverte au moins partiellement,
d) dans lequel les composantes (A), (B) ou (A'), (B') sont introduites dans la cavité (3') en étant séparées localement l'une de l'autre,
e) fermeture du moule (1) à nouveau, dans lequel les composantes (A), (B) ou (A'), (B') sont mélangées et réparties sur une surface (8) à revêtir de la pièce moulée (4) et
f) réticulation du système réactif (R) dans la cavité.

2. Procédé selon la revendication 1, **caractérisé en ce qu'**une des composantes (A) ou (B) est appliquée sur la surface (8) de la pièce moulée (4) à revêtir, et l'autre composante (A'), (B') est appliquée, à l'opposé de la première composante (A) ou (B), sur une surface intérieure (7) d'une moitié de moule du moule (1), dans lequel en particulier les emplacements d'application des première et seconde composantes (A, A', B, B') se font face dans un sens de fermeture (5) du moule (1).

3. Procédé selon la revendication 1, **caractérisé en ce que** les deux composantes (A) et (B) ou (A') et (B') sont appliquées en étant distantes localement l'une de l'autre et décalées temporellement l'une de l'autre sur la surface (8) à revêtir de la pièce moulée (4), ou bien, les deux composantes (A) et (B) respectivement (A') et (B'), sont appliquées en étant distantes localement l'une de l'autre et décalées temporellement l'une de l'autre sur une surface intérieure (7) de la cavité ouverte (3') .

4. Procédé selon l'une des revendications précédentes, **caractérisé en ce que** les composantes (A) et (B) sont des composantes pures du système réactif (R), qui sont introduites respectivement en une quantité dans la cavité (3') qui est prévue pour une réticulation optimale du système réactif (R).

5. Procédé selon l'une des revendications précédentes, **caractérisé en ce que** les composantes (A'), (B') sont des composantes partiellement mélangées à partir des composantes pures (A) et (B), dans lequel le rapport de mélange des composantes (A) et (B) dans les composantes (A') et (B') partiellement mélangées s'écarte du rapport de mélange prévu pour la réticulation optimale du système réactif (R).

6. Procédé selon l'une des revendications précédentes, **caractérisé en ce que** comme système réactif (R), on emploie un système réactif qui réticule par activation thermique.

7. Procédé selon l'une des revendications précédentes, **caractérisé en ce que** comme système réactif (R), on emploie un système réactif qui réticule par exclusion d'oxygène, c'est à dire dans un environnement anaérobie.

8. Procédé selon l'une des revendications précédentes, **caractérisé en ce que** les composantes (A), (B) ou (A'), (B') du système réactif (R) sont introduites dans la cavité ouverte (3') du moule (1) au moyen d'un dispositif de manipulation (9).

9. Procédé selon l'une des revendications précédentes, **caractérisé en ce que** les composantes (A), (B) ou (A'), (B') sont introduites dans la cavité (3') par des canaux d'amenée (12) dans au moins une moitié de moule (11).

10. Procédé selon l'une des revendications précédentes, **caractérisé en ce que** les canaux d'amenée (12) présentent des buses de peinture pour le système réactif (R).

11. Procédé selon l'une des revendications précédentes, **caractérisé en ce que** l'application/l'introduction des composantes (A), (B) sur la surface (8) de la pièce moulée (4) à revêtir ou sur la surface intérieure (7) du moule s'effectue par gouttes ou par formation de gouttes.

12. Procédé selon l'une des revendications précédentes, **caractérisé en ce que** les composantes (A), (B) sont appliquées en formant des coulées continues sur la surface (8) de la pièce moulée (4) à revêtir ou sur la surface intérieure (7) de la cavité (3').

13. Procédé selon l'une des revendications précédentes, **caractérisé en ce que** l'emplacement d'application des composantes (A), (B) ou (A'), (B') sur la pièce moulée (4) ou la surface intérieure (7) de la cavité ouverte (3') est fonction de la géométrie de la pièce moulée, en particulier du contour du bord de la pièce moulée (15), afin de garantir une répartition la plus régulière possible sur la surface (8) de la pièce moulée (4).

14. Procédé selon l'une des revendications précédentes, **caractérisé en ce que** les composantes (A), (B) ou (A'), (B') se faisant face sur la pièce moulée (4) et la surface intérieure (7) de la cavité ouverte (3') se touchent peu avant la fermeture renouvelée du moule (1) et sont ainsi mélangées intimement lorsque l'on continue de fermer le moule (1).

15. Procédé selon l'une des revendications précédentes, **caractérisé en ce que** les composantes (A), (B) ou (A'), (B') sont appliquées entre elles en fonction de leur quantité et de leur répartition locale sur la surface (8) de la pièce moulée (4) à revêtir et/ou la surface intérieure (7) de la cavité (3') en fonction de la géométrie de la pièce moulée localement différemment en fonction de la quantité et/ou des écarts locaux.

16. Procédé selon l'une des revendications précédentes, **caractérisé en ce qu'**une des composantes (A), (B) est appliquée en un nombre plus réduit d'emplacements en quantités respectivement plus grandes et les autres composantes (A), (B) ou (A'), (B') sont appliquées en un nombre plus grand d'emplacements dans des quantités respectivement plus réduites.

17. Procédé selon l'une des revendications précédentes, **caractérisé en ce que** pour la réticulation d'un système réactif (R) résistant thermiquement, au moins une moitié de moule (11) est chauffée à une température nécessaire pour la réticulation.

18. Procédé selon l'une des revendications précédentes, **caractérisé en ce que** lors de l'emploi d'un système réactif (R) à réticulation anaérobie, il n'est pas effectué de chauffage de la moitié de moule (11).

19. Procédé selon l'une des revendications précédentes, **caractérisé en ce qu'**une répartition optimisée des composantes (A), (B) et (A'), (B') sur la surface (8) de la pièce moulée (4), respectivement la surface intérieure (7) de la cavité (3'), est calculée en fonction de la géométrie de la pièce moulée et/ou de la forme spatiale de la pièce moulée dans le cadre d'essais ou au moyen d'une simulation d'écoulement/de mélange.

20. Procédé selon l'une des revendications précédentes, **caractérisé en ce qu'**un outil à table coulissante comprenant au moins une cavité (3) de moule et au moins deux cavités de revêtement (3') est employé en tant que moule (1).

21. Procédé selon l'une des revendications précédentes, **caractérisé en ce qu'**après un degré suffisant de la réticulation du système réactif (R), le moule (1) est ouvert et la pièce moulée (4) revêtue est ensuite prélevée du moule (1).

22. Procédé selon l'une des revendications précédentes, **caractérisé en ce qu'**en tant que système réactif (R), on emploie une peinture, une résine, en particulier du polyuréthane (PUR), une peinture acrylique ou un autre système réactif (R) approprié.

23. Procédé selon l'une des revendications précédentes, **caractérisé en ce que** la composante B, B' présente des propriétés d'agent d'accrochage ou est dotée d'additifs d'agent d'accrochage et/ou la composante A, A' présente des propriétés ou des additifs qui garantissent des exigences d'utilisation souhaitées de la couche de peinture finie.
